# EUROPÄISCHE PATENTSCHRIFT

(11) **EP 4 119 406 B1**
(45) Veröffentlichungstag und Bekanntmachung des Hinweises auf die Patenterteilung: **21.02.2024**
(21) Anmeldenummer: 22178189.1
(22) Anmeldetag: 09.06.2022
(51) Int. Cl.: B60T 13/66, B60T 13/74, B60T 17/22

(54) **PRÜFANORDNUNG ZUR FUNKTIONSPRÜFUNG EINES FAHRZEUG-BREMSREGELSYSTEMS**
TEST ARRANGEMENT FOR THE FUNCTIONAL TESTING OF A VEHICLE BRAKE CONTROL SYSTEM
DISPOSITIF D'ESSAI DESTINÉ À L'ESSAI FONCTIONNEL D'UN SYSTÈME DE RÉGULATION DE FREIN DE VÉHICULE

(30) Priorität: 15.07.2021 DE 102021118337
(43) Veröffentlichungstag der Anmeldung: 18.01.2023
(73) Patentinhaber: Audi AG, 85045 Ingolstadt (DE)
(72) Erfinder: Petersen, Krister, 85057 Ingolstadt (DE)

(56) Entgegenhaltungen:
- EP-A1- 3 741 635
- CN-A- 109 677 388
- DE-A1- 19 751 431
- DE-A1-102019 215 536
- US-A1- 2015 291 279
- US-B1- 10 131 329

## Beschreibung

Die Erfindung betrifft eine Prüfanordnung zur Funktionsprüfung eines Bremsregelsystems in einem Fahrzeug nach dem Oberbegriff des Anspruches 1 sowie ein Verfahren zur Durchführung einer solchen Funktionsprüfung nach Anspruch 10.

Eine derartige Anordnung ist beispielsweise aus der EP 3 741 635 A1 bekannt.

In einem Fahrzeug können die Betriebsbremsen der beiden Hinterräder zusätzlich jeweils ein Parkbremssystem aufweisen. Bei Premium-Fahrzeugen sind die folgenden beiden Arten von Parkbremssystemen im Einsatz: Erstens kann das Parkbremssystem einen Kombi-Bremssattel mit integriertem Parkbrems-Aktuator aufweisen, der von einem Steuergerät des Bremsregelsystems ansteuerbar ist. Alternativ dazu kann zweitens das Parkbremssystem eine Parkbremstrommel mit integriertem Parkbrems-Aktuator aufweisen, der ebenfalls vom Steuergerät des Bremsregelsystems ansteuerbar ist. Der verfügbare Stellweg des in der Parkbremstrommel integrierten Parkbrems-Aktuators ist im Vergleich zum im Kombi-Bremssattel integrierten Parkbrems-Aktuator stärker weglimitiert. Von daher ist der in der Parkbremstrommel integrierte Parkbrems-Aktuator zusätzlich mit einem Positionsgeber, zum Beispiel Hall-Sensor, verbaut. Der Positionsgeber ermittelt eine aktuelle Position des Parkbrems-Aktuator und ist in Signalverbindung mit dem Steuergerät des Bremsregelsystems.

Mit Hilfe einer gattungsgemäßen Prüfanordnung wird eine Funktionsprüfung eines Bremsregelsystems in einem Fahrzeug durchgeführt. In dem Fahrzeug kann entweder ein erstes Parkbremssystem (das heißt Kombi-Bremssattel) oder ein zweites Parkbremssystem (das heißt Parkbremstrommel) verbaut sein. Das Bremsregelsystem weist ein Steuergerät mit einem ersten Steuermodul zur Ansteuerung des ersten Parkbremssystems und ein zweites Steuermodul zur Ansteuerung des zweiten Parkbremssystems auf. Zudem weist das Bremsregelsystem ein Ansteuerlogik für die hydraulisch arbeitenden Betriebsbremsen des Fahrzeugs auf.

Die Ansteuerlogik, das erste Steuermodul und das zweite Steuermodul sind Software-Bestandteile eines Bremsregelsystem-Steuergeräts. Je nach Art des verbauten Parkbremssystems wird im fahrzeugbauenden Werk oder in einer Werkstatt eine Kodierung durchgeführt, bei der mittels einer Kodierungs-Einheit entweder das erste Steuermodul oder das zweite Steuermodul im Steuergerät aktiviert wird, um eine einwandfreie Ansteuerung des verbauten Parkbremssystems durchzuführen, während das nicht aktivierte Steuermodul funktionslos bleibt.

Bei einer Falsch-Kodierung ergibt sich folgender Sachverhalt: Die Falsch-Kodierung, das heißt ein unbeabsichtigtes Vertauschen der Steuermodule, kann gegebenenfalls zu einer Bauteilbeschädigung im verbauten Parkbremssystem führen. Das erste Steuermodul und das zweite Steuermodul steuern nämlich die jeweils zugeordneten Parkbremssysteme mit unterschiedlicher Strom-/Spannungsstärke an.

Aus der EP 2 955 405 B1 ist ein Bremskomponenten-Austauschsystem bekannt.

Die Aufgabe der Erfindung besteht darin, eine Prüfanordnung zur Funktionsprüfung eines Fahrzeug-Bremsregelsystems bereitzustellen, bei der eine Bauteilbeschädigung im Parkbremssystem aufgrund einer Falsch-Kodierung in einfacher Weise vermieden werden kann.

Die Aufgabe ist durch die Merkmale des Anspruches 1 oder 10 gelöst. Bevorzugte Weiterbildungen der Erfindung sind in den Unteransprüchen offenbart.

Die Erfindung geht von einer Prüfanordnung zur Funktionsprüfung eines Bremsregelsystems in einem Fahrzeug aus. In dem Fahrzeug kann entweder ein erstes Parkbremssystem (das heißt Kombi-Bremssattel) oder ein zweites Parkbremssystem (das heißt Parktrommelbremse) verbaut sein. Das Bremsregelsystem weist ein Steuergerät mit einem ersten Steuermodul und einem zweiten Steuermodul auf. Eine Bauteilbeschädigung wird dann vermieden, wenn mit dem ersten Steuermodul das erste Parkbremssystem angesteuert wird, oder alternativ mit dem zweiten Steuermodul das zweite Parkbremssystem angesteuert wird.

Je nach Art des im Fahrzeug verbauten Parkbremssystems wird im fahrzeugbauenden Werk oder in einer Werkstatt eine Kodierung durchgeführt, bei der eine Kodierungs-Einheit entweder das erste Steuermodul oder das zweite Steuermodul aktiviert, um eine einwandfreie Ansteuerung des verbauten Parkbremssystems durchzuführen. Das nicht aktivierte Steuermodul erhält dagegen keinen Steuerungs-Zugriff auf das verbaute Parkbremssystem, das heißt es bleibt funktionslos. Gemäß dem kennzeichnenden Teil des Anspruches 1 weist das Bremsregelsystem eine Prüfeinheit auf, mit der eine Vertauschplausibilisierung durchgeführt wird, um eine Falsch-Kodierung der Steuermodule zu erkennen. Bei Vorliegen einer solchen Falsch-Kodierung kann die Prüfeinheit ein Warnsignal generieren und/oder das verbaute Parkbremssystem funktionslos schalten, damit eine Bauteilbeschädigung des Parkbremssystems vermieden wird. Anhand der erfindungsgemäßen Vertauschplausibilisierung wird geprüft, ob das, für das verbaute Parkbremssystem richtige Steuermodul aktiviert ist oder nicht.

Die Prüfeinheit bewertet eine Zuordnung des ersten Steuermoduls zum ersten Parkbremssystem als plausibel. In gleicher Weise bewertet die Prüfeinheit eine Zuordnung des zweiten Steuermoduls zum zweiten Parkbremssystem als plausibel. Im Gegensatz dazu bewertet die Prüfeinheit eine Zuordnung des zweiten Steuermoduls zum ersten Parkbremssystem als nicht plausibel, das heißt als Falsch-Kodierung. Analog dazu bewertet die Prüfeinheit eine Zuordnung des ersten Steuermoduls zum zweiten Parkbremssystem ebenfalls als nicht plausibel, das heißt als Falsch-Kodierung.

In einer technischen Umsetzung kann die Prüfeinheit einen Ermittlungs-Baustein zur Bestimmung des (mittels der Kodierung) aktivierten Steuermoduls aufweisen. Zudem kann die Prüfeinheit einen Ermittlungs-Baustein zur Bestimmung des im Fahrzeug verbauten Parkbremssystems aufweisen. Auf der Grundlage der beiden Ermittlungs-Bausteine kann die Prüfeinheit die erfindungsgemäße Vertauschplausibilisierung durchführen.

Nach erfolgter Feststellung und Dokumentation der Falsch-Kodierung wird bevorzugt eine Ansteuerung der Parkbremse verhindert. In diesem Fall sind jegliche Ansteuerungen der Parkbremse unterbunden, um einen effektiven Bauteilschutz bereitzustellen.

Bei der Kodierung erzeugt die Kodierungs-Einheit ein Kodierungs-Signal, mit dem das Bremsregelsystem ansteuerbar ist. Auf der Grundlage des Kodierungs-Signals wird im Steuergerät des Bremsregelsystems eines der beiden Steuermodule aktiviert.

In einer konkreten Ausführungsvariante kann das erste Parkbremssystem einen Kombi-Bremssattel mit integriertem Parkbrems-Aktuator aufweisen, der vom Bremsregelsystem-Steuergerät ansteuerbar ist. Das alternativ verbaubare, zweite Parkbremssystem kann eine Parkbremstrommel aufweisen, in der ein Parkbrems-Aktuator sowie ein Positionsgeber integriert ist. Mit Hilfe des Positionsgebers kann eine aktuelle Position des Parkbrems-Aktuators ermittelt werden. Der Positionsgeber ist in Signalverbindung mit dem zweiten Steuermodul, um die aktuelle Aktuator-Position zum zweiten Steuermodul zu leiten.

Das zweite Steuermodul kann einen Sensordiagnose-Baustein aufweisen. Bei im Fahrzeug verbautem zweiten Parkbremssystem ist dessen Positionsgeber in Signalverbindung mit dem Sensordiagnose-Baustein bringbar. Mit Hilfe des Sensordiagnose-Bausteins ist ein einwandfreier Verbau des Positionsgebers erkennbar. In diesem Fall generiert der Sensordiagnose-Baustein ein entsprechendes Verbau-Signal. In gleicher Weise kann der Sensordiagnose-Baustein auch einen Nichtverbau des Positionsgebers erkennen und ein entsprechendes Nichtverbau-Signal generieren.

In einer signaltechnisch einfachen Gestaltung kann die Prüfeinheit auf der Grundlage des Verbau-Signals, des Nichtverbau-Signals sowie des Kodierungs-Signals die erfindungsgemäße Vertauschplausibilisierung durchführen.

In diesem Fall kann die Prüfeinheit bei Erfassung des Kodierungs-Signals zur Aktivierung des ersten Parkbremssystems (arbeitet ohne Positionsgeber) und bei Erfassung des Verbau-Signals (das heißt Positionsgeber ist an das Steuergerät angeschlossen) einen Falsch-Kodierung erkennen. Analog dazu kann die Prüfeinheit bei Erfassung des Kodierungs-Signals zur Aktivierung des zweiten Parkbremssystems (arbeitet mit Positionsgeber) und bei Erfassung des Nichtverbau-Signals (das heißt es ist kein Positionsgeber an das Steuergerät) eine Falsch-Kodierung erkennen.

Nachfolgend ist ein Ausführungsbeispiel der Erfindung anhand der beigefügten Figuren beschrieben. Es zeigen:
- Fig. 1 und 2: jeweils eine grob schematische Ansicht eines Fahrzeugs mit darin verbautem EPBI-Parkbremssystem (Fig. 1), und mit darin verbautem DSE-Parkbremssystem (Fig. 2);

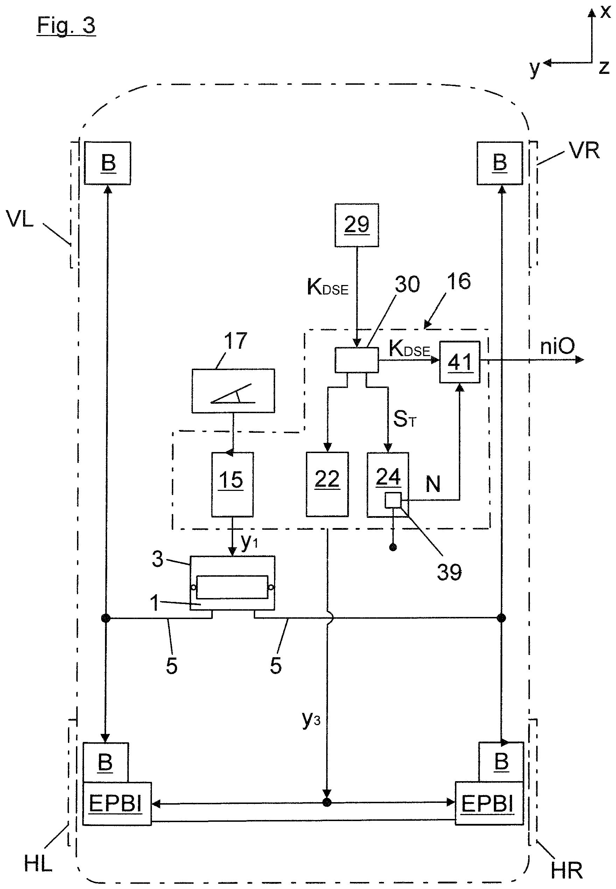

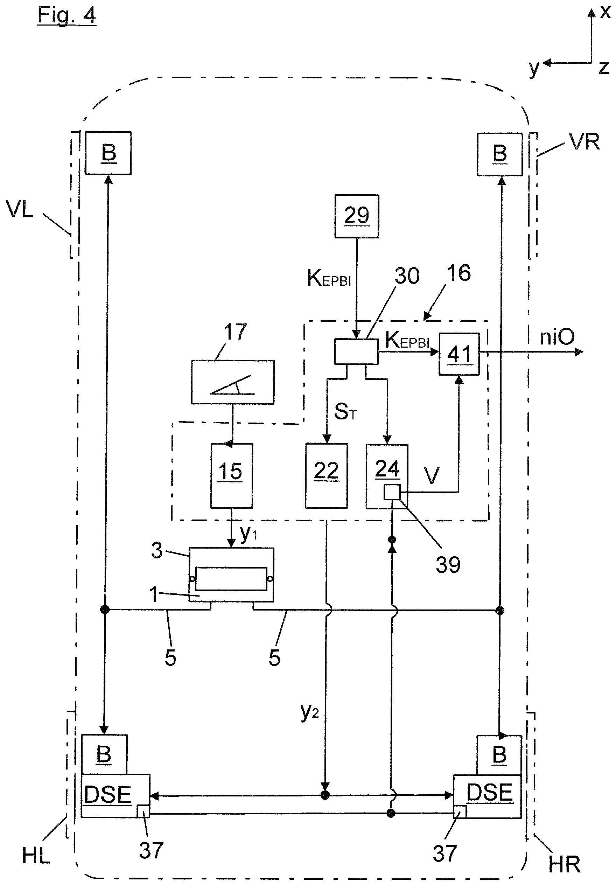

- Fig. 3 und 4: Ansichten entsprechend der Fig. 1 und 2, in denen jeweils eine Falsch-Kodierung veranschaulicht ist; und
- Fig. 5 und 6: jeweils Prinzipskizzen eines EPBI-Parkbremssystems (Fig. 5) und eines DSE-Parkbremssystems (Fig. 6).

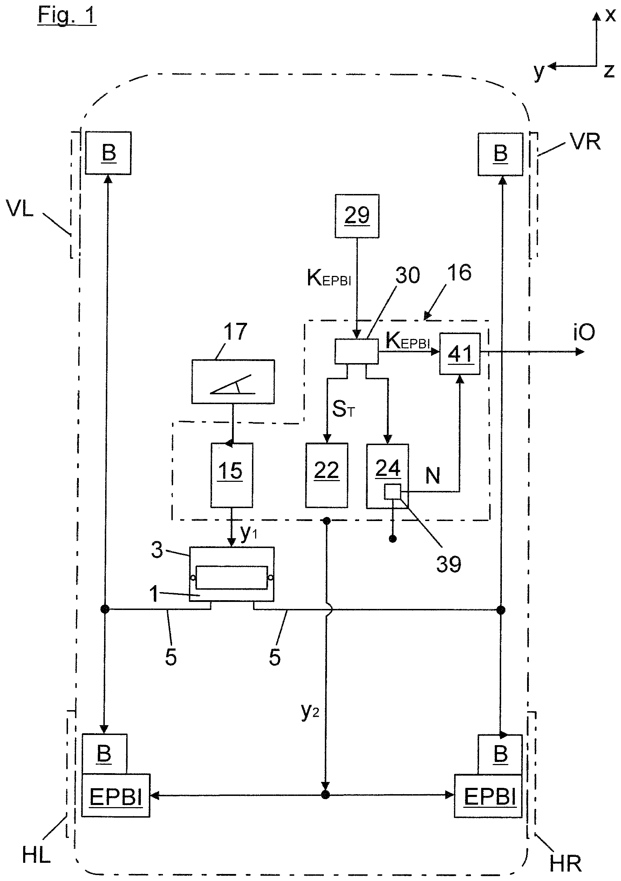

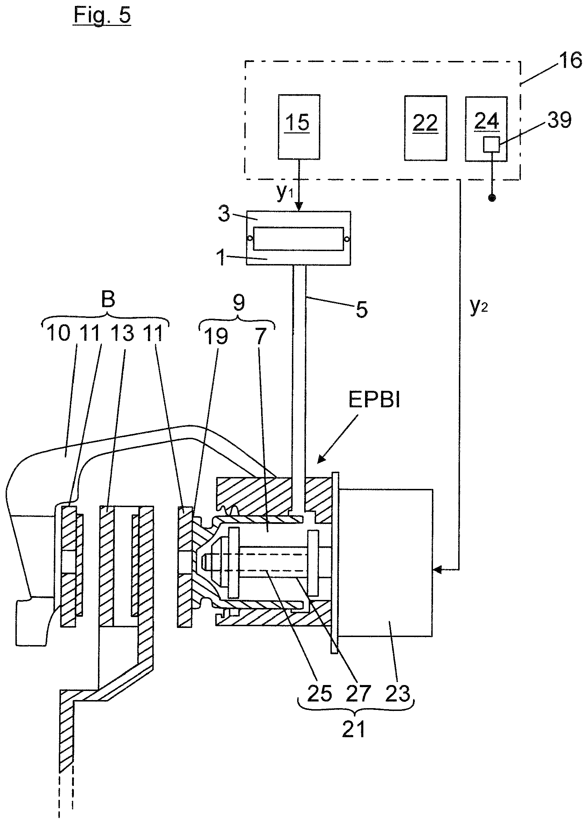

In der Figur 1 ist ein Bremssystem eines zweispurigen Fahrzeugs insoweit beschrieben, als es für das Verständnis der Erfindung erforderlich ist. Demnach weist das Bremssystem an den Vorderrädern VR und Hinterrädern HR jeweils eine Betriebsbremse B auf, die in einem Hydraulikkreis eingebunden ist, bei dem eine Hydraulikkammer 1 eines als Kolben-Zylinder-Einheit realisierten Druckerzeugers 3 über eine Hydraulikleitung 5 mit einer Hydraulikkammer 7 eines Bremszylinders 9 (Figur 5) verbunden ist. Der Bremszylinder 9 ist in einem Gußbremssattel 10 integriert. In dem Gußbremssattel 10 sind hubverstellbare Bremsbeläge 11 angeordnet, die mit einer fahrzeugradseitigen Bremsscheibe 13 zusammenwirken. Der Druckerzeuger 3 ist über eine Ansteuerlogik 15 eines Bremsregelsystem-Steuergerätes 16 ansteuerbar. Die Ansteuerlogik 15 generiert im Fahrbetrieb auf der Grundlage einer über ein Bremspedal 17 fahrerseitig erzeugten Verzögerungs-Vorgabe ein Stellsignal y₁, mit dem der Druckerzeuger 3 ansteuerbar ist. Im Druckerzeuger 3 kann in Abhängigkeit von dem Stellsignal y₁ der am Bremszylinderkolben 19 (Figur 5) des Bremszylinders 9 anliegende Hydraulikdruck erhöht werden, um die Bremsbeläge 11 im Bremseingriff mit der Bremsscheibe 13 zu bringen.

Wie aus der Figur 1 hervorgeht, sind an den Hinterrädern HR des Fahrzeugs jeweils EPBI-Parkbremssysteme (EPBI = Elektrische Parkbremse Integriert) verbaut. Hierbei wirkt der Gußbremssattel 10 als ein Kombi-Bremssattel mit integriertem Parkbrems-Aktuator 21 (Figur 5). Dieser ist von einem ersten Steuermodul 22 der Steuereinheit 16 ansteuerbar. Der Parkbrems-Aktuator 21 ist in der Figur 5 aus einem Drehantriebmotor 23 mit einer Gewindespindel 25 aufgebaut, die zusammen mit einer Druckmutter 27 einen Gewindetrieb bilden. Dieser ragt in der Figur 5 in die Hydraulikkammer 7 des Bremszylinders 9 ein. Bei Betätigung des Parkbrems-Aktuators 21 fährt die Druckmutter 27 in der Figur 5 nach links, wodurch der Bremszylinderkolben 19 mitsamt Bremsbelägen 11 bis in Bremseingriff gegen die Bremsscheibe 13 gedrückt wird, und zwar unter Aufbau einer Spannkraft, mit der der Parkbrems-Aktuator 21 unter Zwischenlage des Bremszylinderkolbens 19 die Bremsbeläge 11 gegen die Bremsscheibe 13 drückt.

Wie aus der Figur 1 weiter hervorgeht, weist die Steuereinheit 16 neben der Ansteuerlogik 15 und dem ersten Steuermodul 22 ein zweites Steuermodul 24 auf, die zur Ansteuerung eines später beschriebenen DSE-Parkbremssystems dient. Im fahrzeugbauenden Werk oder in einer Werkstatt erfolgt vor der Fahrzeug-Inbetriebnahme eine Kodierung. Bei der Kodierung liegt das von der Kodierungs-Einheit 29 erzeugte Kodierungs-Signal K_{EPBI} am Signaleingang eines Eingabe-Bausteins 30 des Steuergeräts 16 an. Auf der Grundlage des Kodierungs-Signals K_{EPBI} erzeugt der Eingabe-Baustein 30 ein Aktivierungssignal S_{T}, mit dem in der Figur 1 das erste Steuermodul 22 aktiviert wird, um eine einwandfreie Ansteuerung des EPBI-Parksystems durchzuführen. Das zweite Steuermodul 24 des Steuergeräts 16 bleibt deaktiviert.

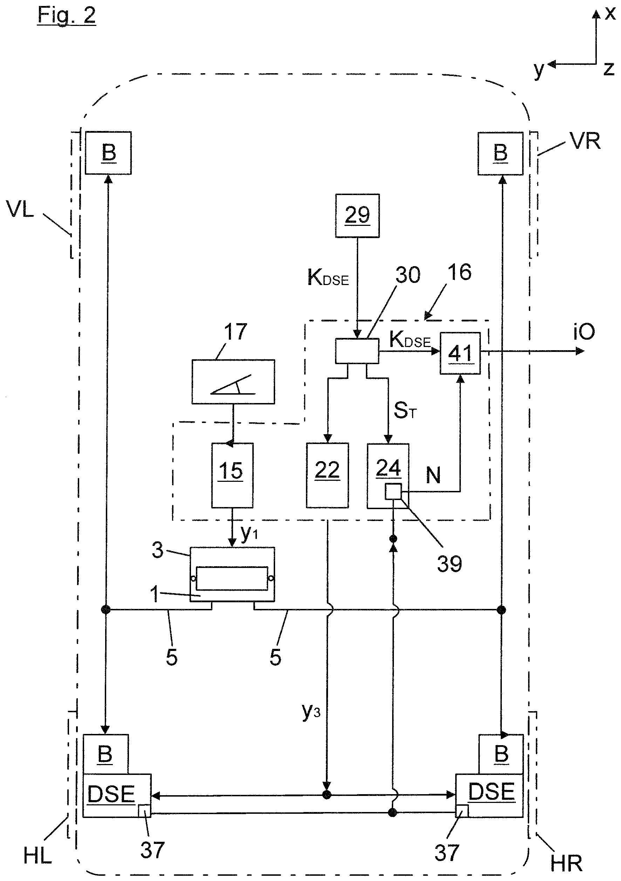

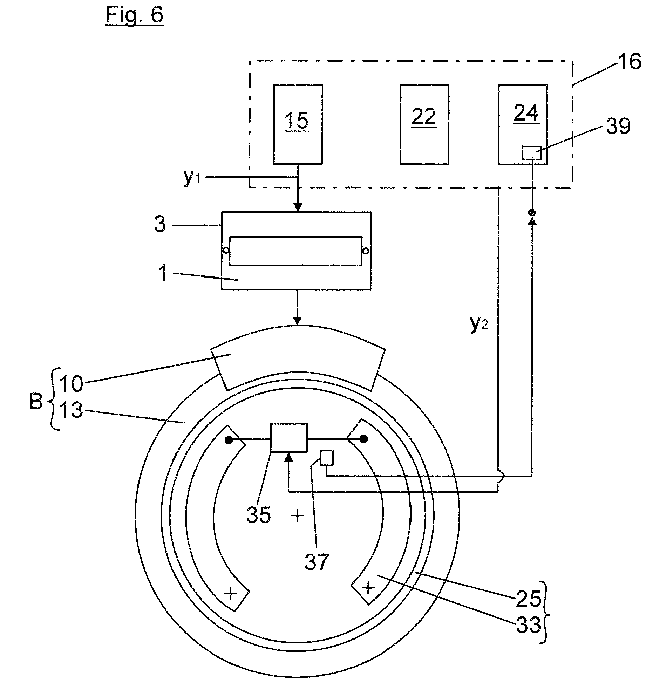

Alternativ dazu ist in der Figur 2 an den Hinterrädern HR des Fahrzeugs jeweils ein DSE-Parkbremssystem (DSE = Dual-Servo-Electric) verbaut. In der Figur 6 weist das DSE-Parkbremssystem eine radial innerhalb des Gußbremssattels 10 angeordnete Parkbremstrommel 31 auf, die mit Bremsbacken 33 zusammenwirkt. Die Bremsbacken 33 können über einen Parkbrems-Aktuator 35 in Bremseingriff mit dem Innenumfang der Parkbremstrommel 31 gebracht werden. Der Parkbrems-Aktuator 35 ist über Stellsignale y₃ vom zweiten Steuermodul 24 der Steuereinheit 16 ansteuerbar. Zudem ist dem Parkbrems-Aktuator 35 ein Positionsgeber 37 (zum Beispiel Hall-Sensor) zugeordnet, um eine aktuelle Position des Parkbrems-Aktuators 35 zu ermitteln. Der Positionsgeber 37 ist in Signalverbindung mit dem zweiten Steuermodul 24.

Wie aus den Figuren weiter hervorgeht, weist das zweite Steuermodul 24 einen Sensordiagnose-Baustein 39 auf. Der Sensordiagnose-Baustein 39 erkennt einen einwandfreien Verbau des Positionsgebers 37 und generiert ein entsprechendes Verbau-Signal V. Alternativ dazu erkennt der Sensordiagnose-Baustein 39 auch einen Nichtverbau des Positionsgebers 37. In diesem Fall generiert der Sensordiagnose-Baustein 39 ein entsprechendes Nichtverbau-Signal N.

Bei der Kodierung liegt gemäß der Figur 2 das von der Kodierungs-Einheit 29 erzeugte Kodierungs-Signal K_{DSE} am Signaleingang eines Eingabe-Bausteins 30 des Steuergeräts 16 an. Auf der Grundlage des Kodierungs-Signals K_{DSE} erzeugt der Eingabe-Baustein 30 ein Aktivierungssignal S_{T}, mit dem in der Figur 2 das zweite Steuermodul 24 aktiviert wird, während des erste Steuermodul 22 deaktiviert bleibt.

Um eine Falsch-Kodierung der Steuermodule 22, 24 zu dokumentieren, weist die Steuereinheit 16 eine erfindungsgemäße Prüfeinheit 41 auf. Mittels der Prüfeinheit 41 ist eine Vertauschplausibilisierung durchführbar, anhand der geprüft wird, ob das, für das verbaute Parkbremssystem richtige Steuermodul aktiviert ist. Die Prüfeinheit 41 führt die Vertauschplausibilisierung auf der Grundlage des Verbau-Signals V, des Nichtverbau-Signals N sowie der Kodierungs-Signale K_{EPBI}, K_{DSE} durch. Bei Erfassung des Kodierungs-Signals K_{EPBI} zur Aktivierung des EPBI-Parkbremssystems (arbeitet ohne Positionsgeber 37) und bei Erfassung des Verbau-Signals V (das heißt Positionsgeber 37 ist verbaut) erkennt die Prüfeinheit 41 eine Falsch-Kodierung. In gleicher Weise erkennt die Prüfeinheit 41 eine Falsch-Kodierung, sofern das Kodierungs-Signal K_{DSE} zur Aktivierung des DSE-Parkbremssystems (arbeitet mit Positionsgeber 37) und das Nichtverbau-Signal N (das heißt kein Positionsgeber 37 verbaut) erfasst wird.

### Bezugszeichenliste

- 1: Hydraulikkammer
- 3: Druckerzeuger
- 5: Hydraulikleitung
- 7: Hydraulikkammer
- 9: Bremszylinder
- 10: Gußbremssattel
- 11: Bremsbeläge
- 13: Bremsscheibe
- 15: Ansteuerlogik
- 16: Steuergerät
- 17: Bremspedal
- 19: Bremszylinderkolben
- 21: Parkbrems-Aktuator
- 22: erstes Steuermodul
- 23: Drehantriebmotor
- 24: zweites Steuermodul
- 25: Gewindespindel
- 27: Druckmutter
- 29: Kodierungs-Einheit
- 30: Eingabe-Baustein
- 31: Parkbremstrommel
- 33: Bremsbacken
- 35: Parkbrems-Aktuator
- 37: Positionsgeber
- 39: Sensordiagnose-Baustein
- 41: Prüfeinheit
- y_{1,} y_{2,} y₃: Stellsignale
- B: Betriebsbremse
- EPBI: erstes Parkbremssystem
- DSE: zweites Parkbremssystem
- K_{EPBI}: erstes Kodierungs-Signal
- K_{DSE}: zweites Kodierungs-Signal
- V: Verbau-Signal
- N: Nichtverbau-Signal
- S_{A}: Aktivierungssignal
- niO: Falsch-Kodierung
- iO: Richtig-Kodierung
- VR: Vorderräder
- HR: Hinterräder

## Patentansprüche

1. Prüfanordnung zur Funktionsprüfung eines Bremsregelsystems in einem Fahrzeug, in dem entweder ein erstes Parkbremssystem (EPBI) oder ein zweites Parkbremssystem (DSE) verbaubar ist, wobei das Bremsregelsystem ein Steuergerät (16) mit einem ersten Steuermodul (22) zur Ansteuerung des ersten Parkbremssystems (EPBI) und mit einem zweiten Steuermodul (24) zur Ansteuerung des zweiten Parkbremssystems (DSE) aufweist, und wobei entweder das erste Steuermodul (22) oder das zweite Steuermodul (24) mittels einer Kodierungs-Einheit (29) aktivierbar ist, um eine Ansteuerung des zugeordneten Parkbremssystems durchzuführen, während das nicht aktivierte Steuermodul funktionslos bleibt,
**dadurch gekennzeichnet,**
**dass** das Bremsregelsystem eine Prüfeinheit (41) aufweist, mit der eine Vertauschplausibilisierung durchführbar ist, anhand der prüfbar ist, ob das, für das verbaute Parkbremssystem (EPBI, DSE) richtige Steuermodul (22, 24) aktiviert ist.

2. Prüfanordnung nach Anspruch 1, **dadurch gekennzeichnet, dass** die Prüfeinheit (41) eine Zuordnung des ersten Steuermoduls (22) zum ersten Parkbremssystem (EPBI) bzw. eine Zuordnung des zweiten Steuermoduls (24) zum zweiten Parkbremssystem (DSE) als plausibel bewertet, und/oder dass die Prüfeinheit (41) eine Zuordnung des zweiten Steuermoduls (24) zum ersten Parkbremssystem (EPBI) bzw. eine Zuordnung des ersten Steuermoduls (22) zum zweiten Parkbremssystem (DSE) als nicht plausibel, das heißt als Falsch-Kodierung (niO), bewertet, und dass insbesondere nach erfolgter Feststellung und Dokumentation der Falsch-Kodierung (niO) eine Ansteuerung der Parkbremse auch effektiv verhindert ist, und/oder dass nach erfolgter Feststellung und Dokumentation der Falsch-Kodierung (niO) jegliche Ansteuerungen der Parkbremse unterbunden werden, um einen effektiven Bauteilschutz bereitzustellen.

3. Prüfanordnung nach Anspruch 1 oder 2, **dadurch gekennzeichnet, dass** die Prüfeinheit (41) einen Ermittlungs-Baustein (30) zur Bestimmung des aktivierten Steuermoduls (22, 24) aufweist und einen Ermittlungs-Baustein (39) zur Bestimmung des im Fahrzeug verbauten Parkbremssystems aufweist, und dass die Prüfeinheit (41) auf der Grundlage der beiden Ermittlungs-Bausteine (30, 39) die Vertauschplausibilisierung durchführt.

4. Prüfanordnung nach Anspruch 1, 2 oder 3, **dadurch gekennzeichnet, dass** bei der Kodierung die Kodierungs-Einheit (29) ein Kodierungs-Signal (K_{EPBI}, K_{DSE}) erzeugt, mit dem das Steuergerät (16) des Bremsregelsystem ansteuerbar ist, und dass auf der Grundlage des Kodierungs-Signals (K_{EPBI}, K_{DSE}) eines der Steuermodule (22, 24) des Steuergeräts (16) aktivierbar ist.

5. Prüfanordnung nach einem der vorhergehenden Ansprüche, **dadurch gekennzeichnet, dass** das erste Parkbremssystem (EPBI) einen Kombi-Bremssattel (10) mit integriertem Parkbrems-Aktuator (21) aufweist, der vom Steuergerät (16) ansteuerbar ist, und/oder dass das zweite Parkbremssystem (DSE) eine Parkbremstrommel (31) mit integriertem Parkbrems-Aktuator (35) sowie mit einem Positionsgeber (37) aufweist, um eine aktuelle Position des Parkbrems-Aktuators (35) zu ermitteln, und/oder dass im verbauten Zustand der Positionsgeber (37) in Signalverbindung mit dem zweiten Steuermodul (24) ist.

6. Prüfanordnung nach Anspruch 5, **dadurch gekennzeichnet, dass** das zweite Steuermodul (24) einen Sensordiagnose-Baustein (39) aufweist, und dass bei im Fahrzeug verbautem zweiten Parkbremssystem (DSE) der Positionsgeber (37) in Signalverbindung mit dem Sensordiagnose-Baustein (39) ist, und dass der Sensordiagnose-Baustein (39) einen einwandfreien Verbau des Positionsgebers (37) erkennt und ein entsprechendes Verbau-Signal (V) generiert, oder dass der Sensordiagnose-Baustein (39) einen Nichtverbau des Positionsgebers (37) erkennt und ein entsprechendes Nichtverbau-Signal (N) generiert.

7. Prüfanordnung nach Anspruch 6, **dadurch gekennzeichnet, dass** die Vertauschplausibilisierung auf der Grundlage des Verbau-Signals (V), des Nichtverbau-Signals (N) sowie der Kodierungs-Signale (K_{EPBI}, K_{DSE}) erfolgt.

8. Prüfanordnung nach Anspruch 7, **dadurch gekennzeichnet, dass** die Prüfeinheit (41) bei Erfassung des Kodierungs-Signals (K_{EPBI}) zur Aktivierung des ersten Parkbremssystems (EPBI) und bei Erfassung des Verbau-Signals (V), das den Verbau eines Positionsgebers (37) anzeigt, eine Falsch-Kodierung (niO) erkennt.

9. Prüfanordnung nach Anspruch 7 oder 8, **dadurch gekennzeichnet, dass** die Prüfeinheit (41) bei Erfassung des Kodierungs-Signals (K_{DSE}) zur Aktivierung des zweiten Parkbremssystems (DSE) und bei Erfassung des Nichtverbau-Signals (N), das den Nicht-Verbau eines Positionsgebers (37) anzeigt, eine Falsch-Kodierung (niO) erkennt.

10. Verfahren zur Funktionsprüfung eines Bremsregelsystems in einem Fahrzeug mittels einer Prüfanordnung nach einem der vorhergehenden Ansprüche, in dem entweder ein erstes Parkbremssystem (EPBI) oder ein zweites Parkbremssystem (DSE) verbaubar ist, wobei das Bremsregelsystem ein Steuergerät (16) mit einem ersten Steuermodul (22) zur Ansteuerung des ersten Parkbremssystems (EPBI) und mit einem zweiten Steuermodul (24) zur Ansteuerung des zweiten Parkbremssystems (DSE) aufweist, und wobei entweder das erste Steuermodul (22) oder das zweite Steuermodul (24) mittels einer Kodierungs-Einheit (29) aktiviert wird, um eine Ansteuerung des zugeordneten Parkbremssystems durchzuführen, während das nicht aktivierte Steuermodul funktionslos bleibt,
**dadurch gekennzeichnet,**
**dass** in dem Bremsregelsystem eine Vertauschplausibilisierung durchführgeführt wird, anhand der geprüft wird, ob das, für das verbaute Parkbremssystem richtige Steuermodul aktiviert ist.

## Claims

1. Test arrangement for the functional testing of a vehicle brake control system, in which either a first park brake system (EPBI) or a second park brake system (DSE) is installable, wherein the brake control system has a control device (16) having a first control module (22) for controlling the first park brake system (EPBI) and having a second control module (24) for controlling the second park brake system (DSE), and wherein either the first control module (22) or the second control module (24) is activated by means of an encoding unit (29) in order to carry out a controlling of the assigned part brake system, while the non-activated control module remains without function,
**characterized in that**
the brake control system has a test unit (41) with which an exchange plausibility check can be carried out, on the basis of which it can be checked whether the control module (22, 24) which is correct for the installed park brake system (EPBl, DSE) is activated.

2. Test arrangement according to claim 1, **characterized in that** the test unit (41) evaluates an assignment of the first control module (22) to the first park brake system (EPBI) or an assignment of the second control module (24) to the second park brake system (DSE) as plausible, and/or that the test unit (41) evaluates an assignment of the second control module (24) to the first park brake system (EPBI) or an assignment of the first control module (22) to the second park brake system (DSE) as not plausible, i.e. as a false encoding (niO), and that in particular after a successful determination and documentation of the false encoding (niO) a controlling of the park brake is also effectively prevented, and/or that after a successful determination and documentation of the false encoding (niO) all control of the park brake is prevented, in order to provide an effective component protection.

3. Test arrangement according to claim 1 or 2, **characterized in that** the test unit (41) has a determination module (30) for determining the activated control module (22, 24) and a determination module (39) for determining the park brake system installed in the vehicle, and that the test unit (41) carries out the exchange plausibility check on the basis of the two determination modules (30, 39).

4. Test Arrangement according to claim 1, 2 or 3, **characterized in that** in the encoding the encoding unit (29) generates an encoding signal (K_{EPBI}, K_{DSE}) with which the control device (16) of the brake control system can be controlled, and that on the basis of the encoding signal (K_{EPBI}, K_{DSE}) one of the control modules (22, 24) of the control device (16) can be activated.

5. Test arrangement according to any of the preceding claims, **characterized in that** the first park brake system (EPBI) has a combination brake caliper (10) with integrated park brake actuator (21) which can be controlled by the control device (16) and/or that the second park brake system (DSE) has a park brake drum (31) with integrated park brake actuator (35) and with a position sensor (37) in order to determine a current position of the park brake actuator (35), and/or that in the installed state the position sensor (37) is in signal connection with the second control module (24).

6. Test arrangement according to claim 5, **characterized in that** the second control module (24) has a sensor diagnosis module (39), and that when a second park brake system (DSE) is installed in the vehicle, the position sensor (37) is in signal connection with the sensor diagnosis module (39), and that the sensor diagnosis module (39) detects a perfect installation of the position sensor (37) and generates a corresponding installation signal (V), or that the
sensor diagnosis module (39) recognizes a non-installation of the position sensor (37) and generates a corresponding non-installation signal (N).

7. Test arrangement according to claim 6, **characterized in that** the exchange plausibility check takes place on the basis of the installation signal (V), the non-installation signal (N) and the encoding signals (K_{EPBI}, K_{DSE}).

8. Test arrangement according to claim 7, **characterized in that** when the encoding signal (K_{EPBI}) is detected for activating the first park brake system (EPBI) and when the installation signal (V) is detected which displays the installation of a position sensor (37), the test unit (41) recognises a false encoding (niO).

9. Test arrangement according to claim 7 or 8, **characterized in that** when the encoding signal (K_{DSE}) is detected activating the second park brake system (DSE) and when the non-installation signal (N) is detected which displays the non-installation of a position sensor (37), the test unit (41) recognises a false encoding (niO).

10. Method for the functional testing of a vehicle brake control system by means of a test arrangement according to any of the preceding claims, in which either a first park brake system (EPBI) or a second park brake system (DSE) is installable, wherein the brake control system has a control device (16) having a first control module (22) for controlling the first park brake system (EPBI) and having a second control module (24) for controlling the second park brake system (DSE), and wherein either the first control module (22) or the second control module (24) is activated by means of an encoding unit (29) in order to carry out a controlling of the assigned part brake system, while the non-activated control module remains without function,
**characterized in that**
in the brake control system an exchange plausibility check is carried out, on the basis of which it can be checked whether the control module which is correct for the installed park brake system is activated.

## Revendications

1. Appareil d'essai pour l'essai fonctionnel d'un système de régulation de frein dans un véhicule, dans lequel un premier système de frein de stationnement (EPBI) ou un second système de frein de stationnement (DSE) peut être installé, dans lequel le système de régulation de frein présente un dispositif de commande (16) avec un premier module de commande (22) pour la commande du premier système de frein de stationnement (EPBI) et avec un second module de commande (24) pour la commande du second système de frein de stationnement (DSE), et dans lequel le premier module de commande (22) ou le second module de commande (24) peut être activé au moyen d'une unité de codage (29) afin de réaliser une commande du système de frein de stationnement associé alors que le module de commande non activé reste inopérant,
**caractérisé en ce que**
le système de régulation de frein présente une unité d'essai (41) avec laquelle une vraisemblance d'échange peut être réalisée, à l'aide de laquelle il peut être vérifié si le bon module de commande (22, 24) pour le système de frein de stationnement (EPBI, DSE) installé est activé.

2. Appareil d'essai selon la revendication 1, **caractérisé en ce que** l'unité d'essai (41) évalue comme vraisemblable une association du premier module de commande (22) au premier système de frein de stationnement (EPBI) ou une association du second module de commande (24) au second système de frein de stationnement (DSE), et/ou **en ce que** l'unité d'essai (41) évalue comme non vraisemblable une association du second module de commande (24) au premier système de frein de stationnement (EPBI) ou une association du premier module de commande (22) au second système de frein de stationnement (DSE), c'est-à-dire comme faux codage (niO), et **en ce qu'**en particulier après une constatation et documentation réussies du faux codage (niO), une commande du frein de stationnement est aussi empêchée de manière effective, et/ou qu'après une constatation et documentation réussies du faux codage (niO), toute commande du frein de stationnement est empêchée afin de fournir une protection effective des composants.

3. Appareil d'essai selon la revendication 1 ou 2, **caractérisé en ce que** l'unité d'essai (41) présente un module de détermination (30) pour la détermination du module de commande (22, 24) activé et présente un module de détermination (39) pour la détermination du système de frein de stationnement installé dans le véhicule, et **en ce que** l'unité d'essai (41) met en oeuvre sur la base des deux modules de détermination (30, 39) la vraisemblance d'échange.

4. Appareil d'essai selon la revendication 1, 2 ou 3, **caractérisé en ce que** lors du codage, l'unité de codage (29) génère un signal de codage (K_{EPBI}, K_{DSE}), avec lequel le dispositif de commande (16) du système de régulation de frein peut être commandé, et **en ce que** sur la base du signal de codage (K_{EPBI}, K_{DSE}), l'un des modules de commande (22, 24) du dispositif de commande (16) peut être activé.

5. Appareil d'essai selon l'une quelconque des revendications précédentes, **caractérisé en ce que** le premier système de frein de stationnement (EPBI) présente un étrier de frein combiné (10) avec un actionneur de frein de stationnement intégré (21) qui peut être commandé par le dispositif de commande (16), et/ou **en ce que** le second système de frein de stationnement (DSE) présente un tambour de frein de stationnement (31) avec un actionneur de frein de stationnement (35) intégré ainsi qu'avec un capteur de position (37) afin de déterminer une position actuelle de l'actionneur de frein de stationnement (35), et/ou **en ce que** dans l'état installé, le capteur de position (37) est en liaison de signal avec le second module de commande (24).

6. Appareil d'essai selon la revendication 5, **caractérisé en ce que** le second module de commande (24) présente un module de diagnostic de capteur (39), et **en ce que** pour le second système de frein de stationnement (DSE) installé dans le véhicule, le capteur de position (37) est en liaison de signal avec le module de diagnostic de capteur (39), et que le module de diagnostic de capteur (39) détecte une bonne installation du capteur de position (37) et génère un signal d'installation (V) correspondant, ou **en ce que** le
module de diagnostic de capteur (39) détecte une non installation du capteur de position (37) et génère un signal de non installation (N) correspondant.

7. Appareil d'essai selon la revendication 6, **caractérisé en ce que** la vraisemblance d'échange est effectuée sur la base du signal d'installation (V), du signal de non installation (N) ainsi que des signaux de codage (K_{EPBI}, K_{DSE}).

8. Appareil d'essai selon la revendication 7, **caractérisé en ce que** l'unité d'essai (41) détecte lors de la détection du signal de codage (K_{EPBI}) pour l'activation du premier système de frein de stationnement (EPBI) et lors de la détection du signal d'installation (V) qui indique l'installation d'un capteur de position (37), un faux codage (niO).

9. Appareil d'essai selon la revendication 7 ou 8, **caractérisé en ce que** l'unité d'essai (41) détecte lors de la détection du signal de codage (K_{DSE}) pour l'activation du second système de frein de stationnement (DSE) et lors de la détection du signal de non installation (N) qui indique la non installation d'un capteur de position (37), un faux codage (niO).

10. Procédé d'essai fonctionnel d'un système de régulation de frein dans un véhicule au moyen d'un appareil d'essai selon l'une quelconque des revendications précédentes, dans lequel un premier système de frein de stationnement (EPBI) ou un second système de frein de stationnement (DSE) peut être installé, dans lequel le système de régulation de frein présente un dispositif de commande (16) avec un premier module de commande (22) pour la commande du premier système de frein de stationnement (EPBI) et avec un second module de commande (24) pour la commande du second système de frein de stationnement (DSE), et dans lequel le premier module de commande (22) ou le second module de commande (24) est activé au moyen d'une unité de codage (29) afin de réaliser une commande du système de frein de stationnement associé alors que le module de commande non activé reste inopérant,
**caractérisé en ce que**
une vraisemblance d'échange est mise en oeuvre dans le système de régulation de frein, à l'aide de laquelle il peut être vérifié si le bon module de commande pour le système de frein de stationnement installé est activé.
